# EUROPEAN PATENT SPECIFICATION

(11) **EP 0 401 760 B1**
(45) Date of publication and mention of the grant of the patent: **07.04.1993**
(21) Application number: 90110630.2
(22) Date of filing: 05.06.1990
(51) Int. Cl.: B60J 3/02

(54) **Sun visor for motor vehicles**
Sonnenblende für Kraftfahrzeuge
Pare-soleil pour véhicules automobiles

(30) Priority: 05.06.1989 ES 8901819 U
(43) Date of publication of application: 12.12.1990
(73) Proprietor: INDUSTRIAS TECHNO-MATIC, S.A., 08027 Barcelona (ES)
(72) Inventor: Gabas, Carlos, E-08029 Barcelona (ES)
(74) Representative: Marx, Lothar, Dr.

(56) References cited:
- DE-A- 1 227 789
- DE-A- 1 257 605
- GB-A- 2 204 290

## Description

The present invention relates to a sun visor for motor vehicles of the type disclosed in GB-A-2 204 290. In particular, the invention relates to a sun visor which is different from known sun visors in that its structure offers some excellent features providing advantages of the new sun visor over known similar devices.

In addition, the present invention relates to a process for preparing a sun visor for motor vehicles which process is adapted to advanced techniques used in the production of motor-vehicle parts.

It is a basic requirement for processes of production of motor-vehicle parts like sun visors that they can be carried out in a large industrial scale at very low costs and from easily obtainable materials which are best fitted to the use of the products. Nevertheless, the products necessarily must comply with high quality and safety standards and should be well adapted to the use under severe conditions in a motor vehicle.

Previously known sun visors and processes for their production did not meet the above requirements. The main reason was that sun visors for motor vehicles have a complicated shape resulting from their place and mode of mounting in a motor vehicle. In addition, there existed severe problems resulting from the need to combine the basic structure of such sun visors with the devices for their mounting in a vehicle. Said devices usually consist of a material different from the material of the basic structure, and assembling of said different materials could not satisfactorily be achieved.

From GB-A 2 204 290 a sun visor for motor vehicles is known which comprises two interconnected parts: A blow-molded plastics basic module and an injection-molded attachment module, the basic module being constituted by a unitary, hollow, rigid structure and the attachment module being constituted by an elongate unitary channel-section structure which can fit over an edge portion of the basic module for connection thereto, possibly by glueing. The attachment module is provided at one end with a housing for a rod for supporting the sun visor in the motor vehicle and, at its opposite end, with an engagement bar, coaxial with the rod, for engagement with a suitable hook in the vehicle.

Hence, it is an object of the present invention to provide a sun visor for motor vehicles and a process of its production which overcome the drawbacks of the prior art. In particular, it is an object to provide a sun visor improved with respect to its weight, handling characteristics, stability under conditions of mounting in a vehicle and use during the operation of a vehicle.

Furthermore, it is an object of the invention to provide a process for the production of an improved sun visor which comprises the modern and more advanced techniques nowadays used in the production of motor-vehicle parts.

These objects are achieved by the features of claims 1 and 8.

The invention concerns a lightweight sun visor for motor vehicles comprising a stiff hollow basic structure made of a polymer material A, especially polyethylene, with the upper longitudinal edge being shaped at both ends in a manner to fit with two supplementary end pieces made of a stiff polymer material B, one of which having a housing or cavity enclosing a fixing means for receiving the support pin for said sun visor, the other one constituting an attachment extension, so that the assembly of said basic structure and said supplementary end pieces may be put together either during the preparation process or during a subsequent finishing operation of said sun visor.

The invention also concerns a process for the preparation of such a lightweight sun visor for motor vehicles comprising the steps of forming a stiff hollow basic structure from a polymer material A, providing, at the upper longitudinal edge of said basic structure, spaces for fixing two supplementary end pieces or devices, forming said supplementary end pieces or devices from a stiff polymer material B, one of said devices having a housing or cavity for receiving the support pin for said sun visor, said cavity enclosing a fixing means, and in particular one or more appendices, the other device constituting an attachment extension and in particular having one or more appendices, said preferably existing appendices being suitable for fitting with corresponding cavities in said hollow basic structure, and coupling on said two supplementary end pieces or devices to the corresponding spaces at the upper longitudinal edge of said basic structure.

Further embodiments are referred to in the dependent claims.

The invention is now explained in detail with reference to the non-limitative Figures wherein
Figure 1 shows a frontal view of the sun visor according to the invention with the dotted line representing the positions where the component parts are assembled;
Figure 2 shows a larger-scale view of a part of the sun visor assembled with one of the supplementary end pieces;
Figure 3 shows, as a similar view to that of Figure 2, another part of the sun visor assembled with the other supplementary end piece;
Figure 4 shows a view of the sun visor seen from above;
Figure 5 shows a cross-sectional view of the sun visor along line V-V in Figure 1;
Figure 6 shows a view of the sun visor along line VI-VI in Figure 1; and
Figure 7 shows a partial cross-sectional view of the sun visor along line VII-VII in Figure 1.

Identical reference numerals in the drawings refer to identical parts of the sun visor according to the invention.

The improved sun visor P for motor vehicles according to the invention comprises a hollow basic structure 1 which is made from a stiff polymer A. In a preferred embodiment of the invention, the structure 1 of the improved sun visor is made from a polymer A showing high stiffness and tensile strength, and especially preferred, from a blown polyethylene mass which, with its extraordinary mechanical and tensile strength properties, determines the shape, volume and outline of the sun visor P. As a result of the stiffness and mechanical properties afforded by said polymer material A, the space 2 between the top and bottom sides of the sun visor is left hollow. Hence, the plastic filling found in most cases in sun visors of the prior art is omitted without a loss in stability and tensile strength. In addition, owing to the smaller amount of total mass used, the final weight of the sun visor according to the invention is drastically reduced when compared to known sun visors.

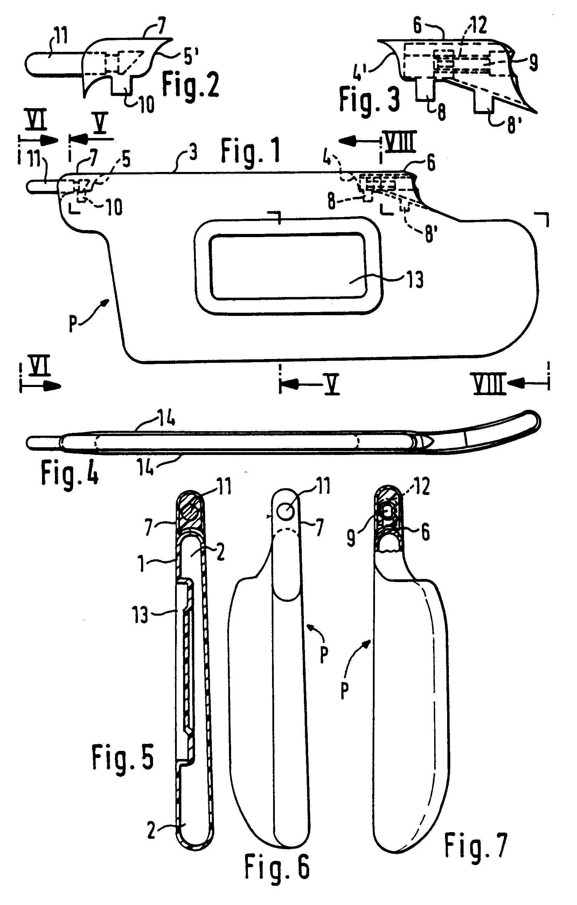

It is now particularly referred to Figures 1, 2 and 3. In Figure 1 which shows one preferred example of the general shape of an improved sun visor according to the invention, the dotted lines 4, 5 near the ends of the upper edge 3 of the hollow basic structure 1 represent that part of the outline of the sun visor P where the basic structure 1 is in contact with supplementary end pieces 6, 7. Said end pieces 6, 7 define the sun visor's axis of articulation and, once assembled to the basic structure 1, give the sun visor its definitive shape.

The supplementary end piece 6 has an outline 4′, which matches geometrically with its counterpart section 4 at one end of the upper edge 3 of the basic structure 1, said counterpart section 4 being represented by said dotted line. Furthermore, said piece 6 has one or more appendices 8, 8′ etc. which, in a preferred embodiment of the invention, are designed as anchoring pegs 8, 8′ etc. in order to be used as means for fixing said supplementary end piece 6 in said basic structure 1 and holding it in position during the use in a motor vehicle. Finally, said supplementary end piece 6 has a cavity 9 adapted to receive a support pin (not shown in the Figures) that connects the sun visor P to the motor vehicle. Said support pin for the sun visor P is held in the cavity 9 of piece 6 by means of a special fixing means 12 which, in a further preferred embodiment, is a spring 12 located appropriately inside the cavity 9 provided for this purpose in said supplementary end piece 6.

In a similar manner, the supplementary end piece 7 has an outline 5′, which matches with its counterpart section 5 at the other end of the upper edge 3 of said basic structure 1, said counterpart section 5 being represented in Figure 1 by said dotted line. Furthermore, said piece 7 has one or more appendices 10, 10′ etc. which, in a preferred embodiment of the invention, are designed as anchoring pegs 10, 10′ etc. in order to be used as means for fixing said supplementary end piece 7 in said basic structure 1 and holding it in position during the use in a motor vehicle. Finally, said supplementary end piece 7 has an extension 11 which may be a pin in a preferred embodiment of the invention and which enables the sun visor P to be attached at the opposite end from where it is fixed to the roof of the motor vehicle. Thereby, any unneccesary bothersome vibrations and stress is avoided when the vehicle is being driven.

Said supplementary end pieces 6, 7 are made of a polymer material B which, in a preferred embodiment, is a stiff plastic material in order to provide the necessary mechanical properties, e. g. impact strength and tensile strength, and not to enhance too much the total weight of the sun visor P. The polymer material B may be different from or identical to the polymer material A used for the basic structure 1 and can be any polymer material known for such purpose and meeting the above requirements.

In another preferred embodiment, the whole assembly of the sun visor P according to invention, i. e. the basic structure 1 including both supplementary end pieces 6, 7, is sheathed in a flexible material in the form of a sheet. Said material can be any suitable material having the desired properties, e. g. excellent tensile strength, heat resistance, pleasant appearance etc. and preferably is a flexible PVC (polyvinylchloride) sheet wrapped around the assembly. Thereby, a uniform appearance and a pleasing finish of the sun visor according to the invention is obtained.

In a further preferred embodiment of the invention, the sun visor P is provided with a mirror on either side of the basic structure 1, more preferred on that side of the basic structure 1 which is in the upright position when the sun visor is turned up in the motor vehicle. For optionally incorporating such a mirror, the sun visor P according the invention preferably has a cavity 13 formed on either side of the basic structure 1 which allows a mirror to be incorporated into the body of the basic structure 1. The mirror may be fixed in said cavity 13 by means of any conventional method, e. g. by a specific glue or by an adhesive tape.

The process for the preparation of a lightweight sun visor P for motor vehicles according to the invention comprises the steps of forming a stiff hollow basic structure 1 from a polymer material A, providing, at the upper longitudinal edge 3 of said basic structure, spaces for fixing two supplementary end pieces or devices 6,7 of a stiff polymer material B, one (6) of said pieces having a housing or cavity 9 for receiving the support pin for said sun visor P, as well as a fixing means 12, and one or more appendices 8, 8′, the other piece 7 constituting an attachment extension 11 and having one or more appendices 10, 10′, said appendices 8, 8′, 10, 10′ being suitable for fitting with corresponding cavities in said hollow basic structure 1, and connecting said two supplementary end pieces 6, 7 to the corresponding positions at the upper longitudinal edge 3 of said basic structure 1.

The basic structure 1 and the supplementary end pieces 6, 7 may be assembled either during the actual manufacture of the basic structure 1 or during a subsequent finishing operation. Connecting said supplementary end pieces 6, 7 to the basic structure 1 can be carried out, e. g. by using a specific glue or adhesive rigidly joining together said parts, or by ultrasonically welding said supplementary end pieces 6, 7 on said basic structure 1, the latter welding operation being preferred.

In a further preferred process, the basic structure 1 is additionally wrapped, in a finishing process step, with a flexible material, more preferred with a flexible PVC (polyvinylchloride) sheet in order to give the overall assembly a uniform appearance and a pleasing finish. Preferably, said parts are first put together in the above described manner and the resulting assembly subsequently subjected to said finishing process step.

Another preferred process according to the invention consists in an additional step of providing said assembly of basic structure 1 and supplementary end pieces 6,7 with a mirror. Said mirror is incorporated into a cavity 13 formed in either side of the basic structure 1, more preferred on that side of the basic structure 1 which is in the upright position when the sun visor is turned up in the motor vehicle. The mirror may be fixed in place in said cavity 13 by means of any conventional method, e. g. by a specific glue or by an adhesive tape.

By the above described process, an improved lightweight sun visor for motor vehicles is provided which can be produced in a large industrial scale at very low costs and from easily obtainable materials which are best fitted to the use of the products in motor vehicles. In addition, the improved sun visor complies with high quality and safety standards, has a pleasant appearance and is well adapted to the use under severe conditions in a motor vehicle.

## Claims

1. A lightweight sun visor for motor vehicles comprising a stiff hollow basic structure (1) made of a polymer material A, a housing or cavity (9) enclosing a fixing means (12) for receiving the support pin (6) for said sun visor, and an attachement device (11) so that said basic structure (1) and end pieces (6, 7) made of a stiff polymer material B may be put together during the preparation process or during a subsequent finishing operation of said sun visor,
characterized in that
the hollow basic structure (1) is shaped at each of both ends of its upper longitudinal edge (3) in a manner to fit with each of said two supplementary end pieces (6, 7), one of which (6) having the housing or cavity (9), the other one (7) constituting said attachement device (11) which is formed as an attachement extension (11).

2. A sun visor according to claim 1, wherein said polymers A and B of said basis structure (1) and end pieces (6,7) respectively are identical or different, and polymer A preferably is polyethylene.

3. A sun visor according to either claim 1 or claim 2 , wherein said fixing means (12) is a spring.

4. A sun visor according to any of the claims 1 to 3, wherein said extension (11) is a pin or shaft.

5. A sun visor according to any of the claims 1 to 4, wherein the housing or cavity (9) is enclosing one or more appendices (8, 8′) and/or the other housing or cavity (7) is enclosing one of more appendices (10, 10′), said appendices being suitable for fitting with corresponding cavities in said hollow basic structure (1), thereby in particular said appencides (8, 8′) and/or said other appendices (10, 10′) being designed as anchoring pegs.

6. A sun visor according to any of the claims 1 to 5 , wherein said assembly of said basic structure (1) and said supplementary end pieces (6, 7) is wrapped with a flexible material.

7. A sun visor according to claim 6, wherein said flexible material is a flexible sheet, prefereably of polyvinylchloride (PVC).

8. A process for the preparation of a sun visor according to any one of the preceding claims, comprising the steps of forming a stiff hollow basic structure (1) from a polymer material A, providing, at the upper longitudinal edge (3) of said basic structure (1), spaces for fixing two supplementary end pieces (6, 7), forming said supplementary end pieces (6, 7) from a stiff polymer material B, and connecting said supplementary end pieces (6, 7) which both have preferably one or more appendices (8, 8′; 10, 10′) being suitable for fitting with corresponding cavities in said hollow basic structure (1) to the corresponding spaces at the upper longitudinal edge (3) of said basic structure (1).

9. A process according to claim 8, wherein said step of connecting said basic structure (1) and said supplementary end pieces (6, 7) is carried out by means of a glue or adhesive or, preferably, by ultrasonically welding.

10. A process according to either claim 8 or claim 9 wherein, after said step of putting together said basic structure (1) and said supplementary end pieces (6, 7) the assembly is subjected to a finishing operation.

## Patentansprüche

1. Leichte Sonnenblende für Kraftfahrzeuge mit einer steifen, hohlen Grundstruktur (1) aus einem polymeren Material A, einer Aufnahme oder Höhlung (9), die ein Fixierungsmittel (12) einschließt, zum Aufnehmen des Stützstiftes für diese Sonnenblende, und mit einer Anbringungsvorrichtung (11), so daß die Grundstruktur (1) und Endstücke (6, 7), die aus einem steifen, polymeren Material B gefertigt sind, während der Herstellung oder während einer nachfolgenden Endbearbeitung der Sonnenblende zusammengefügt werden können,
**dadurch gekennzeichnet**, daß
die hohle Grundstruktur (1) an jedem von beiden Enden ihrer oberen Längskante (3) in einer Weise geformt ist, um mit jedem der zwei zusätzlichen Endstücke (6, 7), von denen eines (6) die Aufnahme oder Höhlung (9) aufweist und das andere (7) die Anbringungsvorrichtung (11) darstellt, die als ein Anbringungsfortsatz (11) ausgebildet ist, zusammenzupassen.

2. Sonnenblende nach Anspruch 1, dadurch gekennzeichnet, daß die Polymere A und B der Grundstruktur (1) und der Endstücke (6, 7) identisch oder verschieden sind, und daß Polymer A vorzugsweise Polyäthylen ist.

3. Sonnenblende nach Anspruch 1 oder 2, dadurch gekennzeichnet, daß das Fixierungsmittel (12) eine Feder ist.

4. Sonnenblende nach einem der Ansprüche 1 bis 3, dadurch gekennzeichnet, daß der Fortsatz (11) ein Stift oder Schaft ist.

5. Sonnenblende nach einem der Ansprüche 1 bis 4, dadurch gekennzeichnet, daß die Aufnahme oder Höhlung (9) einen oder mehrere Ansätze (8, 8′) und/oder die andere Aufnahme oder Höhlung (7) einen oder mehrere Ansätze (10, 10′) einschließt, die geeignet sind, mit entsprechenden Höhlungen in der Grundstruktur (1) zusammenzupassen, wobei insbesondere die Ansätze (8, 8′) und/oder die anderen Ansätze (10, 10′) als Verankerungszapfen ausgelegt sind.

6. Sonnenblende nach einem der Ansprüche 1 bis 5, dadurch gekennzeichnet, daß die Anordnung aus der Grundstruktur (1) und den zusätzlichen End - stücken (6, 7) mit einem flexiblen Material umhüllt ist.

7. Sonnenblende nach Anspruch 6, dadurch gekennzeichnet, daß das flexible Material ein flexibles Flächengebilde, vorzugsweise aus Polyvinylchlorid (PVC), ist.

8. Verfahren zur Herstellung einer Sonnenblende gemäß einem der vorhergehenden Ansprüche mit den Schritten des Formens einer steifen, hohlen Grundstruktur (1) aus einem polymeren Material A, des Vorsehens von Stellen an der oberen Längskante (3) der Grundstruktur (1) zum Befestigen von zwei zusätzlichen Endstücken (6, 7), des Formens der zusätzlichen Endstücke (6, 7) aus einem steifen polymeren Material B und des Verbindens der zusätzlichen Endstücke (6, 7), die beide vorzugsweise einen oder mehrere, zum Zusammenpassen mit entsprechenden Höhlungen in der Grundstruktur (1) geeignete Ansätze (8, 8′; 10, 10′) aufweisen, mit den entsprechenden Stellen an der oberen Längskante (3) der Grundstruktur (1).

9. Verfahren nach Anspruch 8, dadurch gekennzeichnet, daß der Schritt des Verbindens der Grundstruktur (1) und der zusätzlichen Endstücke (6, 7) mittels eines Klebstoffes oder Adhesivs oder vorzugsweise mittels Ultraschallschweißung durchgeführt wird.

10. Verfahren nach Anspruch 8 oder 9, dadurch gekennzeichnet, daß nach dem Schritt des Zusammenfügens der Grundstruktur (1) und der zusätzlichen Endstücke (6, 7) die Anordnung einer Endbearbeitung unterzogen wird.

## Revendications

1. Pare-soleil léger pour véhicules automobiles, comprenant une structure de base (1) rigide et creuse, faite dans une matière polymère A, un logement ou un creux (9) renfermant un moyen de fixation (12) destiné à recevoir l'axe de suspension dudit pare-soleil, et un dispositif d'accrochage (11), de sorte que la structure de base (1) précitée et des pièces d'extrémité (6, 7) fabriquées dans une matière polymère rigide B, puissent être assemblées au cours d'un processus de préparation ou d'une opération ultérieure de finissage dudit pare-soleil, caractérisé en ce que la structure de base creuse (1) est conformée à chacune des deux extrémités de son bord longitudinal supérieur (3) de manière à permettre son emboîtement avec chacune des deux pièces d'extrémité complémentaires (6, 7) précitées, dont l'une (6) comporte le logement ou le creux (9), et l'autre (7) constitue le dispositif d'accrochage (11) précité, matérialisé par une extension d'accrochage (11).

2. Pare-soleil suivant la revendication 1, caractérisé en ce que les polymères A et B précités, respectivement de la structure de base (1) et des pièces d'extrémité (6, 7) précitées, sont identiques ou différents, et en ce que le polymère A est, de préférence, du polyéthylène.

3. Pare-soleil suivant l'une ou l'autre des revendications 1 ou 2, caractérisé en ce que le moyen de fixation (12) précité est un ressort.

4. Pare-soleil suivant l'une quelconque des revendications 1 à 3, caractérisé en ce que l'extension (11) précitée est un axe ou une tige.

5. Pare-soleil suivant l'une quelconque des revendications 1 à 4, caractérisé en ce que le logement ou le creux (9) comporte un ou plusieurs appendices (8, 8′) et/ou l'autre logement ou creux (7) comporte un ou plusieurs appendices (10, 10′), les appendices précités étant aptes à s'emboîter avec des cavités correspondantes que présente la structure de base creuse (1) précitée, de sorte que les appendices (8, 8′) et/ou les autres appendices (10, 10′) précités étant configurés en particulier à la manière de chevilles d'ancrage.

6. Pare-soleil suivant l'une quelconque des revendications 1 à 5, caractérisé en ce que l'assemblage précité formé par lesdites structure de base (1) et pièces d'extrémité complémentaires (6, 7) est recouvert d'une matière flexible.

7. Pare-soleil suivant la revendication 6, caractérisé en ce que ladite matière flexible est une feuille flexible, de préférence en chlorure de polyvinyle (PVC).

8. Procédé de fabrication d'un pare-soleil conforme à l'une quelconque des revendications précédentes, comprenant les étapes consistant à mouler une structure de base creuse et rigide (1) dans une matière polymère A, à ménager des espaces vides sur le bord longitudinal supérieur (3) de la structure de base (1) précitée pour fixer deux pièces d'extrémité complémentaires (6, 7), à mouler lesdites pièces d'extrémité complémentaires (6, 7) dans une matière polymère rigide B, et à assembler la structure de base et les pièces d'extrémité complémentaires précitées (6, 7), qui présentent toutes deux, de préférence, un ou plusieurs appendices (8, 8′ ; 10, 10′) aptes à s'emboîter dans des cavités correspondantes ménagées dans la structure de base creuse (1) précitée, aux emplacements correspondants prévus sur le bord longitudinal supérieur (3) de ladite structure de base (1).

9. Procédé suivant la revendication 8, caractérisé en ce que l'étape précitée de l'assemblage de la structure de base (1) précitée et des pièces d'extrémité complémentaires (6, 7) est exécutée au moyen d'une colle ou d'un adhésif ou, de préférence, par soudage par ultra-sons.

10. Procédé suivant l'une ou l'autre des revendications 8 ou 9, caractérisé en ce que l'ensemble obtenu est soumis à une opération de finissage, au terme de l'étape consistant à joindre la structure de base (1) et les pièces d'extrémité complémentaires (6, 7) précitées.
